**Europäisches Patentamt**

**European Patent Office**

**Office européen des brevets**

(19)

(11) Veröffentlichungsnummer: **0 207 294**
A1

(12) **EUROPÄISCHE PATENTANMELDUNG**

(21) Anmeldenummer: **86107311.2**

(22) Anmeldetag: **30.05.86**

(51) Int. Cl.⁴: **B 23 B 5/04**

(30) Priorität: **04.06.85 DE 3519893**

(43) Veröffentlichungstag der Anmeldung:
**07.01.87 Patentblatt 87/2**

(84) Benannte Vertragsstaaten:
**FR GB IT SE**

(71) Anmelder: **Albert Reiff KG**
**Tübinger Strasse 2 - 6**
**D-7410 Reutlingen(DE)**

(72) Erfinder: **Votteler, Hans**
**Moselstrasse 36**
**D-7410 Reutlingen 25-Altenburg(DE)**

(74) Vertreter: **Möbus, Rudolf, Dipl.-Ing.**
**Hindenburgstrasse 65**
**D-7410 Reutlingen(DE)**

(54) **Vorrichtung zum Bearbeiten und Reinigen der Bremsflächen von Fahrzeugen.**

(57) Die Vorrichtung zum Bearbeiten und Reinigen der Bremsflächen von Fahrzeugen weist ein Werkzeug (10) in Form einer Bremsbacke auf, das als Abriebbelag mindestens einen Schabkörper (16) mit ausgeprägten Schabkanten (17), zwischen denen Vertiefungen (18) zur Ableitung des Abriebs in Richtung auf die Ränder des Schabkörpers ausgebildet sind, aufweist, wobei de Schabkörper (16) auf einer elastisch nachgiebigen Zwischenschicht (15) befestigt ist.

Fig. 1

EP 0 207 294 A1

0207294

F 5063 EU

## Vorrichtung zum Bearbeiten und Reinigen
## der Bremsflächen von Fahrzeugen

Die Erfindung betrifft eine Vorrichtung zum Bearbeiten und
Reinigen der Bremsflächen von Fahrzeugen, mit einem Reinigungswerkzeug in Form einer mit einem Abriebbelag versehenen Bremsbacke.

Bremsscheiben und Bremstrommeln von Fahrzeugen sind der
Korrosion ausgesetzt. In erhöhtem Maße ist dies im Winter
durch die Einwirkung von Streusalz der Fall. Die sich bildenden Korrosionsbeläge werden durch die Einwirkung der
Bremsbacken nur zum Teil wieder beseitigt und beeinträchtigen die Bremswirkung nicht unerheblich. Aus diesem
Grunde ist es üblich, die Bremsflächen von Fahrzeugen von
Zeit zu Zeit mit einen Abrieb der Korrosionsschichten bewirkenden Werkzeugen zu behandeln. Hierzu werden bisher zu
der jeweiligen Bremseinrichtung passende Bremsbacken verwendet, die mit Schleifpapier überspannt werden. Die Wirksamkeit dieser Reinigungswerkzeuge ist jedoch begrenzt,
weil sich das Schleifpapier rasch mit Abrieb zusetzt und
dadurch unwirksam wird. Außerdem ist das Aufspannen des
Schleifpapiers zeitaufwendig.

Es ist auch vorgeschlagen worden, die Anlageseite einer Bremsbacke mit Schmirgelkörnern zu besetzen, die in eine weiche Trägerschicht eingebettet sind. Auch hier ergibt sich der gleiche Nachteil, daß sich die Anlageseite des Reinigungswerkzeuges rasch mit dem Schleifabrieb zusetzt und dadurch die Schmirgelwirkung aufgehoben wird.

Der Erfindung liegt die Aufgabe zugrunde, für eine Vorrichtung der eingangs genannten Art ein Werkzeug zu schaffen, bei welchem sichergestellt ist, daß seine Wirksamkeit nicht durch den sich bildenden Abrieb aufgehoben oder beeinträchtigt wird und das eine lange Standzeit hat.

Die gestellte Aufgabe wird erfindungsgemäß dadurch gelöst, daß der Abriebbelag des Werkzeuges durch mindestens einen Schabkörper gebildet ist, der ausgeprägte Schabkanten aufweist, zwischen denen Vertiefungen zur Aufnahme und Ableitung des Abriebs ausgebildet sind, und daß der Schabkörper auf einer elastisch nachgiebigen Zwischenschicht befestigt ist. Vorteilhafterweise kann der Schabkörper mit linienförmigen Schabkanten mit dazwischenliegenden nutenförmigen Vertiefungen versehen sein, die alle quer oder schräg zur Bewegungsrichtung des Werkzeuges verlaufen. Durch die zwischen den ausgeprägten Schabkanten liegenden Vertiefungen kann ein Abfluß des gebildeten Abriebs nach den Rändern des Schabkörpers hin erfolgen. Dadurch wird ein Auffüllen und Verstopfen der zwischen den Schabkanten liegenden Vertiefungen verhindert. Der Abriebabfluß läßt sich noch dadurch begünstigen, daß der Abriebbelag durch mehrere Schabkörper gebildet sein kann, die unter Ausbildung von Abriebaufnahmelücken mit Abstand voneinander auf der elastisch nachgiebigen Zwischenschicht befestigt sind.

P 5063 EU

Die Vorrichtung gemäß der Erfindung hat den Vorteil, daß
sie nicht nur zum Reinigen von Bremsflächen, sondern auch
Oberflächenbearbeitung der Bremsflächen allgemein verwendet werden kann. Um hier einen zu starken Abrieb zu vermeiden, kann erfindungsgemäß auf der nachgiebigen Zwischenschicht neben dem mindestens einen Schabkörper zusätzlich mindestens ein Gleitkörper angeordnet sein, dessen glatte Oberfläche um einen vorgegebenen Abstand hinter
die Schabkanten zurückgesetzt ist.

Die elastisch nachgiebige Zwischenschicht gewährleistet
eine flächige Anlage der starren Schabkörper gegen die zu
reinigenden Bremsflächen. Die Schabkörper erlauben ein
trockenes Reinigen unter Bildung eines trockenen und
staubförmigen Abriebs. Die Schabkörper können beispielsweise aus Sintermetall mit einer durch Pressen oder
Schleifen profilierten Schabfläche oder aus legiertem
Stahl oder Keramikmaterial mit durch eine Schleifbearbeitung erzielten Schabkanten ausgebildet sein und zweckmäßig
auf die aus einem Elastomer gebildete Zwischenschicht aufvulkanisiert sein.

Nachfolgend werden Ausführungsbeispiele erfindungsgemäß
ausgebildeter Reinigungswerkzeuge anhand der beiliegenden
schematischen perspektivischen Darstellungen näher erläutert.

Im einzelnen zeigen in perspektivischer Darstellung:

Fig. 1          ein erstes Ausführungsbeispiel eines
                Werkzeuges mit einem einstückigen
                Schabkörper;

P 5063 EU

Fig. 2          ein zweites Ausführungsbeispiel eines
                Werkzeuges mit zwei Schabkörpern;

Fig. 3          ein drittes Ausführungsbeispiel eines
                Werkzeuges mit zwei Schabkörpern unter-
                schiedlicher Profilierung und unter-
                schiedlichen Materials;

Fig. 4          ein viertes Ausführungsbeispiel eines
                Werkzeuges mit zusätzlichen Gleitkörpern;

Fig. 5          einen Schnitt durch das Werkzeug nach

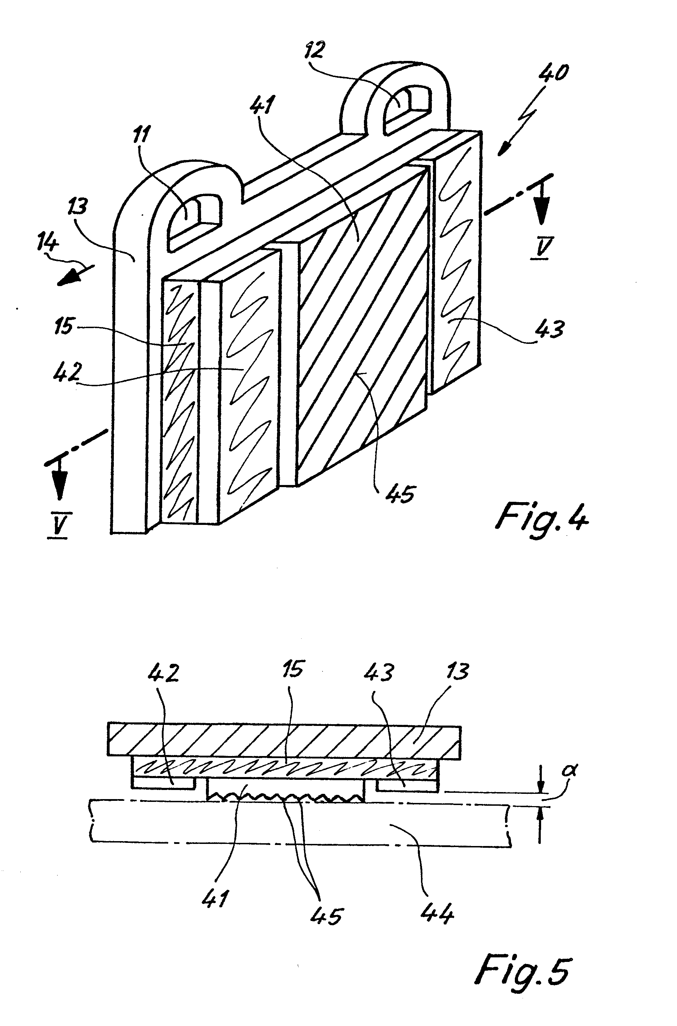

                Fig. 4 entlang der Linie V - V in
                Fig. 4.

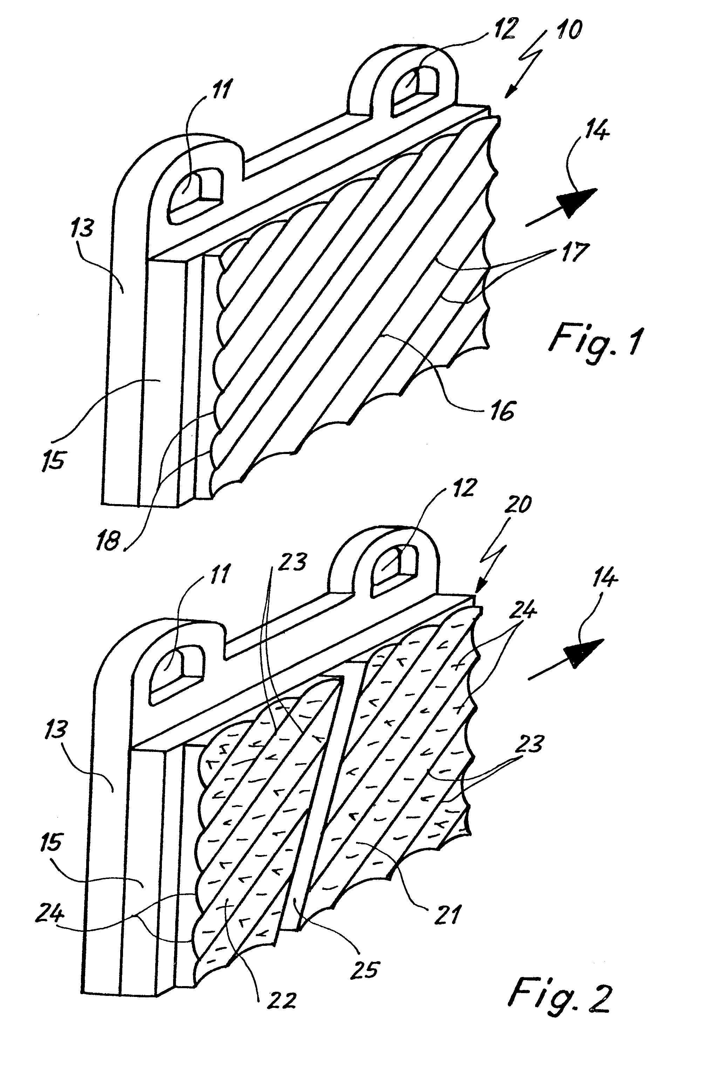

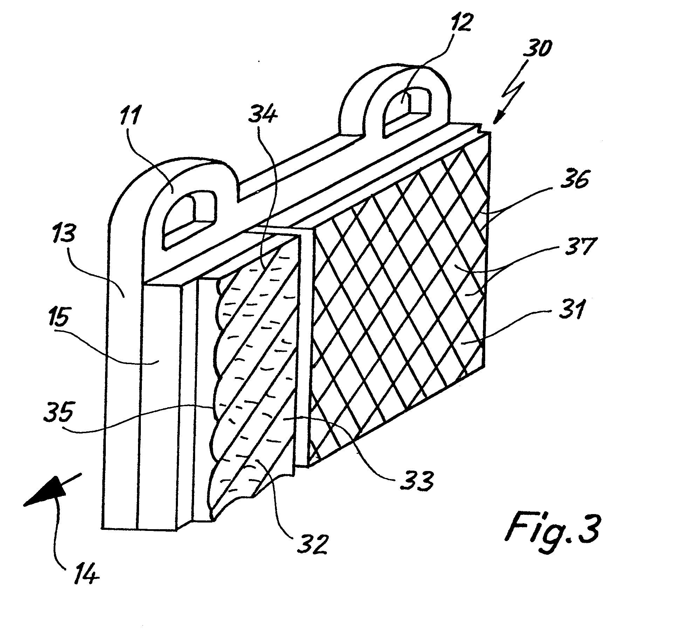

Die Figuren zeigen jeweils ein Werkzeug 10, 20 oder 30 in
Form einer für eine handelsübliche Fahrzeugbremseinrichtung passenden Bremsbacke mit einer zwei Befestigungsösen
11 und 12 aufweisenden Grundplatte 13 aus Stahl. Mit einem
dicken Pfeil 14 ist die Richtung angezeigt, mit welcher
die Werkzeuge 10 (Fig. 1), 20 (Fig. 2), 30 (Fig. 3) und
40 (Fig. 4) relativ zu den zu bearbeitenden Bremsflächen
bewegt werden. Die auf Bremstrommeln oder Bremsscheiben
ausgebildeten Bremsflächen sind in der Zeichnung nicht
dargestellt, auch nicht die Vorrichtung, in welche die
Werkzeuge eingesetzt werden. Die Werkzeuge 10, 20 und 30,
die als Reinigungswerkzeuge eingesetzt sind, und das Werkzeug 40, das zur Egalisierung von Bremsflächen als allgemeines Bearbeitungswerkzeug dient, werden in der Regel
feststehend angeordnet und sind so bemessen, daß sie ein-

P 5063 EU

zeln oder zu mehreren die gesamte Bremsfläche einer in der Reinigungsvorrichtung beweglich angeordneten und angetriebenen Bremsscheibe o. dgl. bestreichen.

Auf die stählerne Grundplatte 13 ist eine gummielastische Zwischenschicht 15 aufgebracht, die durch Vulkanisation einerseits mit der stählernen Grundplatte 13 und andererseits mit einem oder mehreren Schabkörpern verbunden ist, mit denen die Arbeitsseite des Werkzeuges besetzt ist.

Bei dem Ausführungsbeispiel nach Fig. 1 ist das Reinigungswerkzeug 10 mit einem einzigen plattenartigen Schabkörper 16 besetzt, der auf seiner Oberseite mit mehreren, mit Abstand voneinander und schräg zur Relativbewegungsrichtung 14 des Reinigungswerkzeuges verlaufenden, linienförmigen Schabkanten 17 versehen ist. Zwichen den Schabkanten 17 sind rinnenförmige Mulden 18 ausgebildet, die wie die Schabkanten 17 bis zu den Rändern des Schabkörpers 16 verlaufen. Sie dienen zum Abtransport des von den Schabkanten gebildeten Abriebs der Bremsflächen. Der Schabkörper 16 kann aus Sintermetall bestehen, wobei seine Profilierung zu Schabkanten und dazwischenliegenden Nuten durch Pressen erfolgen kann. Der Schabkörper 16 kann aber auch aus einem legierten hochwertigen Stahl bestehen, in welchen die Nuten 18 unter Bildung der Schabkanten 17 eingeschliffen sind.

Bei dem Ausführungsbeispiel nach Fig. 2 ist das Reinigungswerkzeug 20 mit zwei Schabkörpern 21 und 22 besetzt, die in gleicher Weise wie der Schabkörper 16 des Reinigungswerkzeuges 10 mit linienförmigen Schabkanten 23 und dazwischenliegenden flachen Nuten 24 versehen sind. Die beiden Schabkörper 21 und 22 bilden mit ihren einander zugewandten Rändern eine über die ganze Breite der Arbeitsfläche des Reinigungswerkzeuges 20 verlaufende tiefe
Schrägnut 25, in welche Späne und Abrieb aus den Nuten 24
einfallen können. Auch die beiden Schabkörper 21 und 22
können beispielsweise aus Sintermetall gefertigt sein.

Beim Ausführungsbeispiel nach Fig. 3 ist das Reinigungswerkzeug 30 ebenfalls mit zwei Schabkörpern 31 und 32
besetzt, die zwischen sich einen tiefen, nutförmigen Raum
33 zur Aufnahme von Abrieb und Spänen bilden. Der in Richtung der Relativbewegungsrichtung 14 vordere, also zuerst
auf eine zu reinigende Bremsfläche einwirkende Schabkörper
32 ist aus Sintermetall gefertigt und weist eine Sägezahnprofilierung mit linienförmigen Schabkanten 34 und dazwischenliegenden keilförmigen Nuten 35 auf. Der anschließende und nachfolgend auf die Bremsfläche einwirkende Schabkörper 31 besteht aus Keramikmaterial mit einem hohen
Anteil an Korund. Seine Oberfläche ist durch Pressen nach
Art eines von Feilen her bekannten Kreuzschlagmusters mit
sich kreuzenden Poliersteigen 36 versehen. Da der zweite
Schabkörper 31 vorwiegend Polierzwecke erfüllen soll, ist
es ohne Bedeutung, daß die zwischen seinen Kreuzstegen 36
liegenden Vertiefungen 37 keine bis zum Rand des Schabkörpers durchgehende Abrieb-Abflußkanäle bilden.

Die Reinigungswerkzeuge können auch mit mehr als zwei
Schabkörpern gleicher oder unterschiedlicher Materialbeschaffenheit und Oberflächengestaltung versehen sein.
Die Schabkanten und die Zwischenräume zwischen den Schabkanten müssen nicht geradlinig durchlaufend ausgebildet sein. Sie können auch zick-zackförmig verlaufen oder in
kurze, gegeneinander versetzte Schabkanten gegliedert
sein. Die Schabkanten können auch punktförmig ausgebildet
sein.

Das Bearbeitungswerkzeug 40 nach Fig. 4 und 5 weist neben
einem zentral angeordneten, bereits in Verbindung mit den
Ausführungsbeispielen nach Fig. 1 bis 3 beschriebenen
Schabkörper 41 zwei seitlich mit Abstand davon angeordnete
plattenförmige Gleitkörper 42 und 43 auf, die beispielsweise aus Bronze bestehen und eine glatte Oberfläche aufweisen. Die Gleitkörper 42 und 43 können also keinen Abrieb auf einer in Fig. 5 mit strichpunktierten Linien angedeutete Bremsscheibe 44 oder einer anderen Bremsfläche
eines Fahrzeuges bewirken. Die glatte Oberfläche der
Gleitkörper 42 und 43 ist um einen in Fig. 5 eingezeichneten bestimmten Abstand a hinter die Schabkanten 45 des
Schabkörpers 41 zurückgesetzt, so daß sie die Schabwirkung
der Schabkanten 45 nicht behindern. Übersteigt der Anpreßdruck des Werkzeuges jedoch ein bestimmtes Maß, wird der
Schabkörper 41 in die nachgiebige Zwischenschicht 15 soweit eingedrückt, daß die glatten Oberflächen der Gleitkörper 42 und 43 gegen die bearbeitete Bremsfläche zur
Anlage gelangen und verhindern, daß durch den Schabkörper
ein übermäßig starker Abrieb der Bremsfläche erfolgt.

/Z

P 5063 EU

0207294

P a t e n t a n s p r ü c h e :

1. Vorrichtung zum Bearbeiten und Reinigen der Bremsflächen von Fahrzeugen, mit einem Werkzeug in Form einer
mit einem Abriebbelag versehenen Bremsbacke, dadurch
gekennzeichnet, daß der Abriebbelag durch mindestens
einen Schabkörper (16; 21, 22; 31, 32) gebildet ist,
der ausgeprägte Schabkanten (17; 23; 34, 36) aufweist,
zwischen denen Vertiefungen (18; 24; 35) zur Aufnahme
und Ableitung des Abriebs in Richtung auf die Ränder
des Schabkörpers ausgebildet sind, und daß der Schabkörper auf einer elastisch nachgiebigen Zwischenschicht
(15) befestigt ist.

2. Vorrichtung nach Anspruch 1, dadurch gekennzeichnet,
daß der Schabkörper (16; 21, 22; 31, 32) linienförmige
Schabkanten (17; 23; 34, 36) mit dazwischenliegenden
nutenförmigen Vertiefungen (18; 24; 35) aufweist, die
alle quer oder schräg zur Relativbewegungsrichtung (14)
des Werkzeuges (10; 20; 30) verlaufen.

3. Vorrichtung nach Anspruch 1 oder 2, dadurch gekennzeichnet, daß auf der nachgiebigen Zwischenschicht (15)
neben dem mindestens einen Schabkörper (41) zusätzlich
mindestens ein Gleitkörper (42, 43) angeordnet ist,
dessen glatte Oberfläche um einen vorgegebenen Abstand
(a) hinter die Schabkanten (45) des Schabkörpers (41)
zurückgesetzt ist.

0207294

P 5063 EU

4. Vorrichtung nach einem der Ansprüche 1 bis 3, dadurch gekennzeichnet, daß der Abriebbelag durch mehrere Schabkörper (21, 22; 31, 32) gebildet ist, die unter Ausbildung von Abriebaufnahmelücken (25; 33) mit Abstand voneinander auf der elastisch nachgiebigen Zwischenschicht (15) befestigt sind.

5. Vorrichtung nach Anspruch 4, dadurch gekennzeichnet, daß die mehreren Schabkörper (31, 32) eine unterschiedliche Profilierung ihrer Schabfläche aufweisen und/oder aus unterschiedlichem Material bestehen.

6. Vorrichtung nach einem der Ansprüche 1 bis 5, dadurch gekennzeichnet, daß der Schabkörper (16; 21, 22; 31, 32) aus Sintermetall mit durch Pressen profilierter Schabfläche ausgebildet und auf die aus einem Elastomer gebildete Zwischenschicht (15) aufvulkanisiert ist.

7. Vorrichtung nach einem der Ansprüche 1 bis 5, dadurch gekennzeichnet, daß der Schabkörper (16; 21, 22; 31, 32) aus legiertem Stahl oder Keramikmaterial besteht, in welchem die Schabkanten (17; 23; 34) durch Schleifbearbeitung ausgebildet sind.

0207294

Fig.1

Fig.2

0207294

Fig.3

Fig.4

Fig.5

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | DE-A-2 904 957 (KOOPS) <br> * Ansprüche 5-7; Seiten 11-13; Figuren 1-5 * | 1,2,7 | B 23 B 5/04 |
| X | DE-A-2 745 111 (EISENHOFER) <br> * Ansprüche 1-7; Figuren 2, 3 * | 1,4 | |
| P,X | FR-A-2 569 451 (FIARD) <br> * gesamtes Dokument * | 1,6 | |
| A | DE-C- 51 240 (PLATT et al.) <br> * Anspruch * | 1 | |
| A | DD-A- 39 399 (SCHIERNG) <br> * Figuren 1-5 * | 4 | |
| A | US-A-3 590 537 (HENNIG et al.) <br> * Ansprüche 1-5; Figuren 1, 2 * | 1 | RECHERCHIERTE SACHGEBIETE (Int. Cl 4) <br> B 23 B 5/00 <br> B 23 D 79/00 <br> B 24 B 7/00 |
| A | DE-A-3 027 620 (GÄBELEIN) <br> * Ansprüche 1, 2 * | 1 | B 24 B 19/00 |

Der vorliegende Recherchenbericht wurde für alle Patentansprüche erstellt.

| Recherchenort | Abschlußdatum der Recherche | Prüfer |
|---|---|---|
| BERLIN | 28-09-1986 | MARTIN A E W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82